# EUROPEAN PATENT APPLICATION

(11) **EP 3 336 523 A1**
(43) Date of publication of application: **20.06.2018**
(21) Application number: 16204148.7
(22) Date of filing: 14.12.2016
(51) Int. Cl.: G01N 21/64, G02B 21/06

(54) **ILLUMINATION TECHNIQUES FOR SAMPLES**

(71) Applicant: F. Hoffmann-La Roche AG, 4070 Basel (CH); Roche Diagnostics GmbH, 68305 Mannheim (DE)
(72) Inventor: WIETZORREK, Joachim, Zug 6300 (CH)
(74) Representative: Peterreins Schley

(57) **Abstract**

In one aspect of the present disclosure, an illumination system for a sample includes a sample plane in which a sample to be illuminated can be arranged, an illumination device arranged to illuminate a sample in the sample plane, the illumination device being arranged in a Koehler configuration, the illumination device comprising a light source, optics arranged to guide light from the light source to the sample plane, a homogenizer disposed between the light source and the optics having an input face for receiving light from the light source and an output face for outputting light towards the optics, the homogenizer being configured to provide a spatially and angularly homogeneous output light distribution.

## Description

### Technical Field

This disclosure relates to illumination systems, analyzers including illumination systems and methods for illuminating a sample.

### Background

In some known analyzers, illumination devices are employed to illuminate a sample to be analyzed. For instance, illumination devices might be arranged in a so called Koehler configuration. In this configuration, light emitted from a light source of the illumination device arriving at a sample plane is defocused (in contrast to the critical illumination configuration in which the surface of the illumination light source is imaged onto the sample plane). In this manner, a spatially inhomogeneous light source might not influence the homogeneity of the illumination in the sample plane. However, even when deploying a Koehler configuration in the illumination device, the homogeneity of the illumination in the sample plane can still be impaired in different ways. This might adversely influence the image quality of the analyzer and image processing operations of images of the analyzer.

For instance, local artifacts having a varying brightness structure might occur in the illumination field due to perturbations in the path of the illumination light in a Koehler-type illumination system. These artifacts can be classified as actual structures of a sample in automated image processing operations in some examples. This, in turn, can negatively influence the quality of the analysis results of the analyzer.

### Summary

A first general aspect of the present disclosure relates to an illumination system for a sample, the system including a sample plane in which a sample to be illuminated can be arranged, an illumination device arranged to illuminate a sample in the sample plane, the illumination device being arranged in a Koehler configuration, the illumination device comprising a light source, optics arranged to guide light from the light source to the sample plane, a homogenizer disposed between the light source and the optics having an input face for receiving light from the light source and an output face for outputting light towards the optics, the homogenizer being configured to provide a spatially and angularly homogeneous output light distribution.

A second general aspect of the present disclosure relates to a method for illuminating a sample with an illumination device arranged in a Koehler configuration, the method including receiving light of a light source at a homogenizer, homogenizing the received light, outputting the homogenized light at an output face of the homogenizer, imaging the homogenized light onto a pupil plane of optics of an illumination device, guiding the light towards the sample by using illumination device optics, the light being homogenized so that a Bokeh of the illumination device is homogenous.

A third general aspect of the present disclosure relates to a method for illuminating a sample in a Koehler configuration, the method including receiving light of a light source at a homogenizer, spatially and angularly homogenizing the received light, outputting the homogenized light at an output face of the homogenizer, imaging the homogenized light onto a pupil plane of optics of an illumination device and guiding the light towards the sample by using illumination device optics.

The system of the first general aspect and the methods of the second and third general aspects can have one of more of the following advantages in some embodiments.

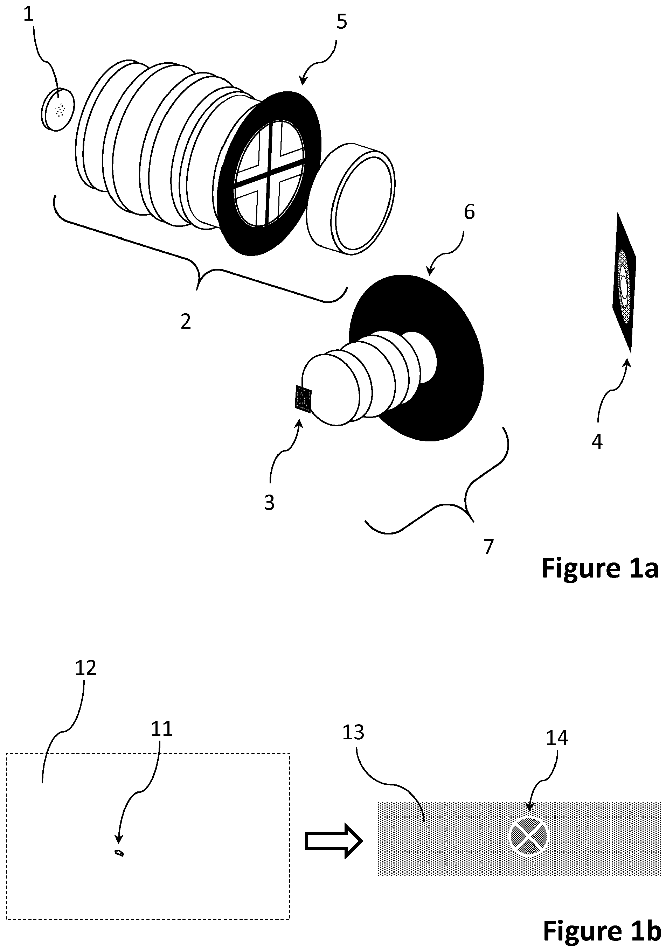

Firstly, by providing homogenizer which generates an angularly and spatially homogeneous output light distribution, a negative influence of artifacts generated by dust (or other particulate perturbations) present in the imaging path can be reduced in some situations. In particular, the techniques of the present disclosure can secure that defocused images of such dust (or other particulate perturbations) are comparatively well behaved (e.g., the defocused images can have a substantially homogenous intensity so that (automated) image processing techniques might not erroneously classify the defocused images as actual features of a sample. In order to explain this effect and the mechanism behind the negative influence of dust (or other particulate perturbations) present in the imaging path in some situations, an example illumination device will be subsequently discussed in connection with **FIG. 1a** and **FIG. 1b**. **FIG. 1a** shows an example illumination system in a Koehler configuration. A light source 3 emits illumination light which is intended to illuminate a sample arranged in a sample plane 1. In order to steer the illumination light towards the sample plane, the illumination device includes imaging optics 2, 7. In the example of **FIG. 1a** the imaging optics includes a collector 7 which is configured to collect light emanating from the light source 3. In addition, the illumination device includes a condenser 2 arranged downstream of the collector 7 to guide the light towards the sample plane 1. The light of the illuminating device is additionally folded by a folding mirror 4.

As the illumination device is arranged in a Koehler configuration, the light emanating from the light source 3 is defocused at the sample plane 1. However, as shown in **FIG. 1a****,** the light is in focus in a first intermediate plane 5 of the imaging optics.

Therefore any structure on the surface of the light emitting device is sharply imaged in the first intermediate plane 5 (but not in the sample plane 1 where the light source's 3 surface is defocused). Thus, the first intermediate plane 5 can also be referred to as a pupil plane of the imaging optics 2, 7. The intermediate plane 5 is optically conjugated with the surface of the light source.

At a second intermediate plane 6 in the collector 7, the light of the light source 3 is defocused. The second intermediate plane 6 is optically conjugated to the sample plane 1. Thus, the second intermediate plane 6 can also be referred to as a field plane of the imaging optics 2, 7.

However, as the light of the light source 3 is defocused at the sample plane, the first intermediate plane 5 is a field plane of the illumination and the second intermediate plane 6 is a pupil plane of the illumination. The former convention will be used subsequently (i.e., intermediate planes optically conjugated to the sample plane are referred to as field plane and intermediate planes optically conjugated to a surface of the light source are referred to as pupil plane).

In the example of **FIG. 1a****,** the light source includes four LEDs arranged in a square pattern. As a consequence, a cross-shaped area separating the four LEDs does not emit light. This area forms a dark cross in the intermediate plane of the illumination device. In other examples, the light source might have it different spatial emission profile. For example, the light source can also include only one LED die in some examples having a spatially inhomogeneous emission pattern. In this example, the first intermediate plane 5 would show an image of the spatially inhomogeneous emission pattern of the single die LED.

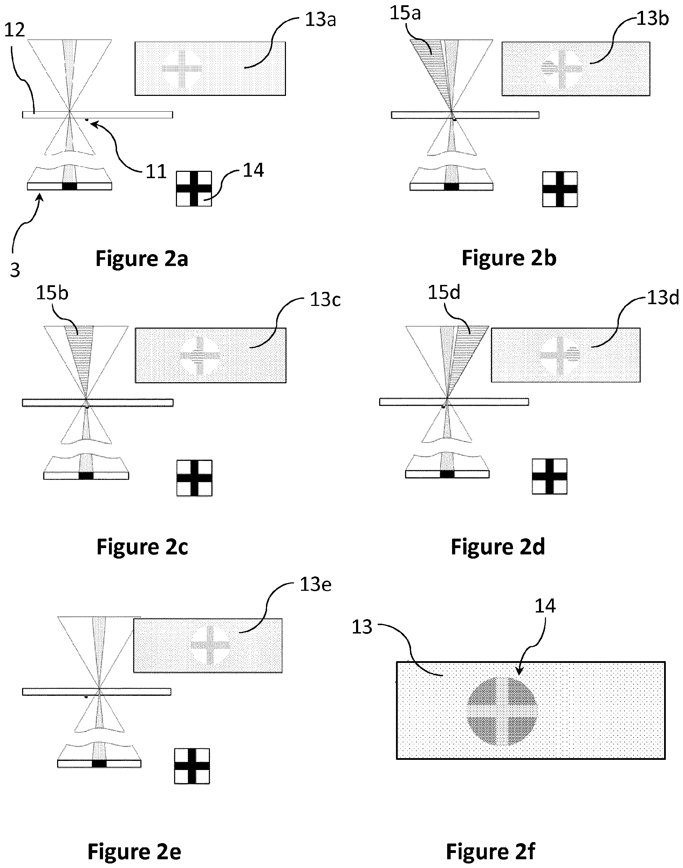

Now, if one assumes that a grain of dust (or any other local perturbation blocking a portion of the rays propagating through the illumination device) is present near the sample plane, an artifact might form on the imaging plane. An example of this situation is illustrated in **FIG. 1b**. On the left-hand side of **FIG. 1b****,** a grain of dust 11 is shown located near the sample plane (e.g., on a cover of the sample). The right-hand side of **FIG. 1b** depicts the illumination pattern of the illumination device on the sample plane. As can be seen, the illumination is substantially homogeneous except for a circular artifact 14 having a cross-shaped internal intensity distribution including a set of four dark fields and a lighter cross-shaped structure in between them. This artifact 14 is generated by the grain of dust 11 in the Koehler configuration illumination device. This process will be subsequently discussed in more detail in connection with **FIGS. 2****.**

**FIGS. 2a** to **2e** each show a bundle of rays of light traversing a particular point in the sample plane 12 before further propagating to the image plane of the imaging device (not shown in **FIGS. 2a** to **2e**). As can be seen, a grain of dust 11 is present near the sample plane 12 (e.g., on a back-side of a cover covering the sample).

As the light emanating from surface of the light source 3 is defocused at the sample plane 12, each particular point on the sample plane receives light from all regions on the surface of the light source 3 (or at least light emanating from an extended surface area of the light source 3). As in **FIG. 1a****,** the light source has a surface which emits light in a spatially inhomogeneous manner (i.e., four LED dies arranged in a square configuration). As a result, the rays of light traversing regions of the sample plane where no dust is present have an angularly inhomogeneous pattern. In other words, no rays can be found in the sample plane 12 under angles emanating from the dark portions of the light source's surface. **FIGS. 2a** to **2e** depict a cross-section through the bundle of rays which illustrates this situation. A central cone of the bundle of rays does not include any light rays, as no rays emanate from the associated portion of the surface of the light source.

Therefore, in a region of the light path slightly spaced apart from the point where the rays are completely defocused (e.g., at the back-side of a cover covering the sample), the light traversing through a particular region in the sample plane has an inhomogeneous intensity distribution associated with the spatial inhomogeneity of the light emission at the light source's surface. In the example shown, this spatial intensity distribution at the light source's surface has four regions of high illumination intensity separated by a cross-shaped region of lower illumination intensity. Now, the overall illumination pattern of the light source is a superposition off all the rays of light traversing the different regions of the sample plane. As a consequence, absent of any dust or other particles the illumination pattern will be homogeneous, as the angular inhomogeneous illumination does not result in any spatial inhomogeneity in the sample plane. In other words, all portions of the sample plane are illuminated with a similar set of rays.

This situation changes, however, if dust particles 11 or other particulate bodies are present in the path of light. Such situation is illustrated in **FIGS. 2b** to **2d****.** As illustrated, the dust particle blanks out a portion of the rays of the illumination light traversing the particular region of the sample plane 12.

The effect of this blanking is shown in **FIG. 2f****.** An artifact 14 including a dark spot with a brighter cross-shaped structure appears. It is somewhat counterintuitive why the areas that emit no light of the light source 3 appear brighter in the artifact 14. However this can be understood when considering **FIGS. 2b** to **2d****.** As can be seen, the dust particle 11 blocks different cones of rays which would otherwise be present in the sample plane (and thus also in the image plane) and would form bright areas.

Now, if the angular distribution of the light emanating from the light source was perfectly homogeneous, the situation in each of **FIGS. 2b** to **2d** would be equivalent. The grain of dust would blank out the same angular cone and thus the same amount of energy in each of the three situations. Therefore, an illumination intensity would be reduced by the same amount for all positions on the sample plane being influenced by the grain of dust. As a consequence, the grain of dust would create a homogenous circular artifact on the sample plane and the image plane. The outer shape and size of this circular artifact is determined by the numerical aperture of the imaging optics, and the shape of any stops which are arranged in the illumination light path. The larger the numerical aperture of the imaging optics, the larger the extension of the artifact. In the same manner, if a in a picture of the imaging optics is defined by a non-circular stop, the artifact will have a non-circular outer shape.

This situation is different if the light source does not homogeneously emit light, as in the example of **FIGS. 2b** to **2d****.** In this case, there can be two qualitatively different situations.

In a first situation, the grain of dust 11 blocks actual rays emitted from the bright parts of the light source's surface. This is illustrated in **FIGS. 2b** and **2d****.** The blocking of rays of light by the grain of dust 11 has the result of relatively strongly diminishing the light intensity of the illumination light in the particular spatial regions of the sample plane behind the grain of dust. The second situation is depicted in **FIG. 2c****.** A small(er) in number of actual rays of light is blocked if the grain of dust is located in an area of the bundle of rays which does not actually contain rays, as it "emanates" from the dark portions of the light source's surface. However the rays emanating from the actual bright surface areas of the light source are still traversing the sample plane in an unobstructed manner.

As a consequence, the light intensity is reduced by a lesser degree in this situation in which the grain of dust actually blocks only parts of the emission cone of the light source which correspond to dark regions on the surface of the light source. This, in turn, leads to a brighter illumination spot behind the grain of dust compared to the spots where actual rays are blocked (as shown in **FIGS. 2b** and **2d**). The situation is similar for other spots in which the grain of dust blocks predominately or only portions of the cone not including actual rays. These spots combine to form the cross-shaped area of higher illumination brightness of the artifact 14. In this manner, the intensity distribution of the artifact 14 is inversed compared to the intensity distribution of the surface of the light source. However, the light intensities in the artifact are still lower than the light intensity in the surrounding areas of the sample plane 12 which are not at all influenced by the dust grain 11.

As can be seen in **FIG. 2f****,** the dust grain can lead to the creation of an artifact with spatially varying brightness features. As discussed above, this type of artifact might be mistaken for in actual feature of the sample, e.g., by automated imaging processors.

Now, the homogenization techniques of the present disclosure can address this issue. For example, by providing a homogenizer according to the first general aspect, in some examples, the intensity distribution of an artifact generated by it dust grain located in the position of **FIG. 2a** can be substantially homogeneous. In this manner, the grain of dust blocks a substantially equal number of actual rays for all spatial positions. Therefore, a darker field forms due to the integrated contributions of the different spatial positions in the illumination pattern. The so produced artifact can be much "better behaved" than the artifact created by the illumination device shown in **FIGS. 2b** to **2e** as it does not have noticeable brightness variation. For example, due to its lacking internal brightness variation, an automated imaging processor might not mistake the artifact for an actual feature of the sample to be imaged.

Secondly, and as a consequence, the illumination techniques of the present disclosure might lead to a reduction in a number of errors by automated image analyzers. This, in turn, can reduce a frequency of false positive or false negative findings. In addition or alternatively, a number of reruns necessary to re-image samples can be reduced in some examples.

Thirdly, the technique of the present disclosure can reduce a necessity to closely control the conditions in the imaging device. For example, a larger amount of dust or other granular particles present in the imaging device can be tolerated. In other examples, the disturbing particle can be a scratch or similar imperfection of a component present in the imaging path which also blocks part of the light similar to the grain of dust shown in **FIGS. 2****.** By using the techniques of the present disclosure, such imperfections might still be tolerable without substantially impairing the performance of an automated imaging device. Therefore, the techniques of the present disclosure might be capable of providing for longer maintenance intervals or working with less perfect elements in the illumination optics. This can render the automated analyzers using the techniques of the present disclosure more cost-efficient.

After having provided an overview over the techniques of the present disclosure, in the following paragraphs several terms will be discussed which are used in the present disclosure in a particular manner.

The term 'light' is used in the present disclosure as not limited to radiation in the visible wavelength range (e.g., between 400 and 780 nm). Rather, light can also include radiation in the IR- or UV-range. For example, light can include radiation in a wavelength range between 150 nm and 2000 µm (e.g., between 250 nm and 1600 nm).

The term 'optics' is used in the present disclosure to refer to any assembly of one or more optical elements arranged to perform a particular task. For example, optics can include one or a plurality of lens elements arranged to steer light from an input plane to an output plane. In addition, optics can include further elements to filter or shape the output light. For example, optics can include field stops or aperture stops, or wavelength selective or other filters. These elements can also be integrated in some examples.

The term 'imaging optics' is used in the present disclosure to refer to any optics which substantially preserves the order of a set of rays propagating through the optics. For example, imaging optics can be configured to create an image of a field or a pupil of an object. Thus, imaging optics are not limited to assemblies configured to generate an image of an object. Rather, and imaging optics can also be configured to generate an image of a pupil of an object (i.e. a defocused image of the field of the object), or a partially defocused image.

The terms 'analyzer' / 'analytical work cell' / 'analytical unit' as used herein encompass any apparatus or apparatus component that can measure analytical properties of a sample, e.g., following a reaction of a sample with a reagent for obtaining a measurement value.

An analyzer can be operable to determine one or more parameters of a sample or a component thereof. For example, a parameter can be an absorption, transmittance or reflectance of the sample contained in a cuvette or other sample vessel. In other examples, a parameter can be a fluorescence of a sample after having been illuminated with excitation light. Apart from optical measurement devices (e.g., to determine an absorption, transmittance or reflectance), an analyzer can include measurement devices to determine a parameter of the sample via one or more chemical, biological, physical, or other technical procedures.

An analyzer may be operable to determine said parameter of the sample or of at least one analyte, process the determined parameter and return an obtained measurement value. The list of possible analysis results returned by the analyzer comprises, without limitation, concentrations of the analyte in the sample, a qualitative (yes or no) result indicating the existence of the analyte in the sample (corresponding to a concentration above the detection level), optical parameters, DNA or RNA sequences, data obtained from mass spectroscopy of proteins or metabolites and physical or chemical parameters of various types.

An analytical work cell may comprise units for pipetting, dosing, and mixing of samples and/or reagents. The analyzer may comprise a reagent holding unit for holding reagents to perform the assays. Reagents may be arranged for example in the form of containers or cassettes containing individual reagents or group of reagents, placed in appropriate receptacles or positions within a storage compartment or conveyor. It may comprise a consumable feeding unit. The analyzer may comprise a process and detection system whose workflow is optimized for certain types of analysis. Examples of such analyzers are clinical chemistry analyzers, coagulation chemistry analyzers, immunochemistry analyzers, urine analyzers, hematology analyzers, nucleic acid analyzers, used to detect the result of chemical or biological reactions or to monitor the progress of chemical or biological reactions.

The term 'sample' refers to material(s) that may potentially contain an analyte of interest. The sample can be derived from a biological source, such as a physiological fluid, including blood, saliva, ocular lens fluid, cerebrospinal fluid, sweat, urine, stool, semen, milk, ascites fluid, mucous, synovial fluid, peritoneal fluid, amniotic fluid, tissue, cultured cells, or the like.

The sample can be pretreated prior to use, such as preparing plasma from blood. Methods of treatment can involve centrifugation, filtration, distillation, dilution, concentration and/or separation of sample components including analytes of interest, inactivation of interfering components, and the addition of reagents. A sample may be used directly as obtained from the source or used following a pretreatment to modify the character of the sample. In some embodiments, an initially solid or semi-solid biological material can be rendered liquid by dissolving or suspending it with a suitable liquid medium. In some examples, the sample can be suspected to contain a certain antigen or nucleic acid.

Unless specified otherwise, the term 'substantially' in the present disclosure refers to a deviation of +/- 10% from a predetermined value. For example, if the length of two elements is substantially equal, they are actual length can differ by up to 10%. In the same manner if an intensity distribution is substantially homogeneous, deviations from up to 10% from an average value might occur.

### Description of the Drawings

**FIG. 1a** shows an example illumination system in a Koehler configuration.
**FIG. 1b** illustrates the generation of an artifact in the sample plane by a dust particle.
**FIGS. 2a to 2e** illustrates rays of the illumination light traversing the different portions of the sample plane.
**FIG. 2f** shows an example artifact generated by a dust grain located in the path of the illumination rays near the sample plane.
**FIG. 3** illustrates an example illumination system including homogenizer according to the present disclosure.
**FIG. 4a** illustrates a portion of an example illumination system including homogenizer according to the present disclosure.
**FIG. 4b** illustrates a portion of another example illumination system including homogenizer according to the present disclosure.
**FIG. 4c** illustrates an example artifact generated by a dust grain located in the path of the illumination rays near the sample plane when employing the techniques of the present disclosure.

### Detailed Description

Particular aspects of the illumination systems, analyzers including illumination systems and methods for illuminating a sample will be discussed subsequently.

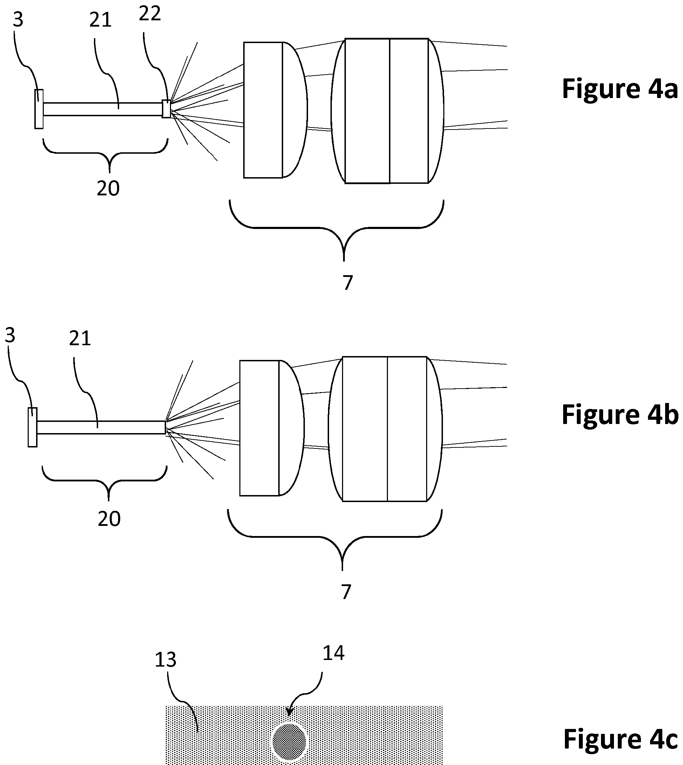

In connection with **FIG. 1** and **FIG. 3** and **FIGS. 4a** and **4b** some aspects of the illumination systems and analyzers including the illumination systems will be discussed. Furthermore, in connection with **FIG.** 4c different aspects the homogenization methods according to the present disclosure will be treated in more detail.

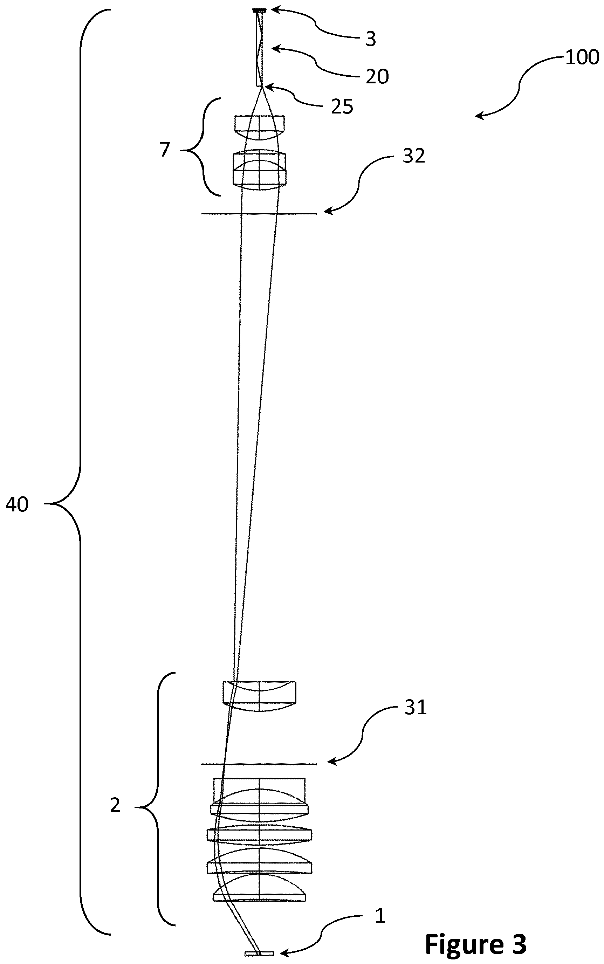

**FIG. 3** illustrates an example illumination system 100 including homogenizer according to the present disclosure.

The illumination system 100 includes a sample plane 1 in which a sample to be illuminated can be arranged and an illumination device 40 arranged to illuminate a sample in the sample plane. The illumination device 40 is arranged in a Koehler configuration and the illumination device comprises a light source 3, optics 7, 2 arranged to guide light from the light source 3 to the sample plane 1 and a homogenizer 20 disposed between the light source 3 and the optics 7, 2.

The homogenizer 20 has an input face for receiving light from the light source 3 and an output 25 face for outputting light towards the optics 7, 2. In addition, the homogenizer 20 is configured to provide a spatially and angularly homogeneous output light distribution.

In the example of **FIG. 3****,** the optics 7, 2 defines two intermediate planes 32, 31. The first intermediate plane 32 is a field plane of the optics 7, 2. The first intermediate plane 32 is optically conjugated to the sample plane 1. As the illumination device 40 is arranged in a Koehler configuration, light emanating from the output face 25 of the homogenizer 20 is defocused at the position of the intermediate plane 32. A field stop can be arranged at the intermediate plane 32 in some examples.

The second intermediate plane 31 is a pupil plane of the optics 7, 2. As the optics 7, 2 is arranged in a Koehler configuration, light emanating from the output face 25 of the homogenizer 20 is in focus at the second intermediate plane 31 (i.e., light of the output face 25 is imaged onto the second intermediate plane 31, the intermediate plane 31 is optically conjugated to the output face 25). A pupil stop can be arranged at the intermediate plane 31 in some examples.

In other examples, the optics 7, 2 can define more than one intermediate plane in which light emanating from the output face 25 of the homogenizer 20 is in focus (i.e., more than one pupil plane optically conjugated to the output face 25 of the homogenizer 20), or more than one intermediate plane in which light emanating from the output face 25 of the homogenizer 20 is defocused (e.g., more than one field plane optically conjugated to the sample plane 1), or both.

By providing a spatially and angularly homogeneous output distribution, the artifacts generated by particulate or other perturbing objects (e.g., grains of dust or other material or scratches) located in the imaging path can be comparatively well behaved. In particular, no artifacts with strongly varying intensity distribution might be generated by particulate or other perturbing objects located in the imaging path, as discussed in the summary section above.

The output light distribution of the homogenizer does not have to be perfectly homogeneous to achieve these advantageous effects. For example, the homogeneous output light distribution can vary spatially by less than 10%, optionally less than 5% in intensity over the output face 25 of the homogenizer 20. In these examples, the deviation can be measured as a deviation from an average intensity calculated over the output face 25 of the homogenizer 20.

In addition or alternatively, the homogeneous output light distribution emitted from the output face 25 of the homogenizer 20 can have a substantially Lambertian distribution within a predetermined output aperture. In some examples, the output aperture of the homogenizer 20 having a substantially Lambertian distribution is selected so that a field stop of the optics arranged to guide light from the light source 3 to the sample plane 1 is completely filled.

This is motivated by the following consideration. An angular homogeneity of the light exiting the output surface 25 of the homogenizer 20 translates in a spatial homogeneity of the light traversing the field plane 32 (e.g., including a field stop).

For example, in **FIG. 3** a field stop of the illumination device 40 can be located in the first intermediate plane 32. As can be seen, only light emitted from the output surface 25 of the homogenizer 20 of the illumination device 40 up to a certain maximum angle reaches the pupil stop located in the second intermediate plane 31. As a consequence, it is not required to provide an angularly homogeneous emission at the output surface 25 of the homogenizer 20 angles larger than this maximum angle (whose light cannot propagate through the illumination device in any case).

In addition or alternatively, the homogeneous output light distribution emanating from an output surface 25 of the homogenizer 20 has a substantially Lambertian distribution within an output aperture of the homogenizer of 0.5 or less, optionally 0.2 or less. Again, this output aperture might be sufficient to provide a spatial homogeneous filling of a field stop in a field plane (e.g., first intermediate plane 32 in optics 7, 2 of **FIG. 3**) further downstream in the imaging device. Therefore, rays emanating from the output surface 25 of the homogenizer under larger angles might not propagate through the imaging optics.

In both of the above discussed cases, the homogeneous output light distribution emanating from the output surface 25 of the homogenizer 20 can deviate by less than 10%, optionally less than 5% in intensity from a Lambertian distribution (within the exit light cone described above).

In the preceding sections, the spatial and angular homogeneity of the output light emitted from an output surface 25 of the homogenizer 20 has been discussed. The device of the present disclosure can also be defined by specifying that the homogenizer 20 is configured so that a Bokeh of the illumination device 40 is homogenous.

The Bokeh characterizes the way an imaging device (i.e., the optics of the illumination device in the example of the present disclosure) renders out-of-focus points of light. In some examples, the Bokeh has a predetermined shape and a predetermined intensity distribution for a predetermined out of focus object. For example, as discussed above, the Bokeh of an imaging device might have a circular shape. The size of the Bokeh might be predetermined by the numerical aperture of the imaging optics and the location of the out of focus point causing the Bokeh. In other examples, the outline of the Bokeh might have different shapes (e.g. polygonal or ellipsoidal, non-circular shapes).

In addition, the Bokeh might show a predetermined spatial intensity distribution. For example, a Bokeh might have an intensity distribution similar to the spatial intensity distribution of the surface of the light source of an imaging device, if the techniques of the present disclosure are not used. In all examples, the Bokeh is a structural feature of the illumination device. For example, the particular light source used in the illumination device, as well as the characteristics of the optics can determine a shape and intensity distribution of the Bokeh.

In some examples of the present disclosure, the homogenous Bokeh achieved when using the techniques of the present disclosure spatially varies by less than 10%, optionally less than 5% in intensity over its spatial extent. In these examples, the intensity of the Bokeh is measured in a field plane of the illumination optics.

After having discussed several features of the homogenizer 20 and the influence of these features on the illumination pattern at the sample plane 1 of the illuminating system 100, further details regarding the imaging system 100 will be discussed in the following sections. In the example of **FIG. 3****,** the optics 7, 2 comprise a collector 7 configured to collect light emanating from the output face 25 of the homogenizer 20 and a condenser 2 configured to guide light towards the sample plane 1 to illuminate a sample.

In one example, the collector 7 is sine corrected. This can secure that a homogeneity in the intensity of the illumination light in a field plane (e.g., intermediate plane 32) is achieved when the output light emanating from the output surface 25 of the homogenizer 20 is angularly homogeneous.

Even though in **FIG. 3** a particular optics having a collector 7 and a condenser 2 is shown, in other examples the optics of the illumination system can be fairly different when using the techniques of the present disclosure. For example, the optics might include additional components (e.g., to relay the imaging light). In still other examples, the optics might include a simpler system including only a smaller number of components.

Furthermore, the collector 7 and the condenser 2 themselves as shown in **FIG. 3** include a number of optical elements. For example, condenser 2 includes a plurality of different lens elements. The same is true for the collector 7. However, this particular layout of the collector and the condenser can be different in other examples employing the techniques of the present disclosure.

For example, the layout of the collector and the condenser of **FIG. 3** might be selected to provide particular imaging properties to the Koehler system (e.g., to avoid operations such as chromatic aberrations). In other examples, the layout of the collector in the condenser might have to fulfill other design criteria. As a consequence, the optical set-up of the collector in the condenser might be different. Nevertheless, these systems still might profit from the homogeneity of the output light according to the present disclosure.

Details regarding the set-up of the light source 3 and the homogenizer 20 will be discussed below in connection with **FIGS. 3a** to **3c.** In the following sections, the remaining parts of the illumination system 100 of the present disclosure and their integration in analyzers will be discussed in more detail.

In general, the illumination systems discussed in the present disclosure can be integrated into any analyzer which requires illumination of a sample in a sample plane. In particular, the illumination system discussed in the present disclosure can be integrated into the analyzers listed in the summary section above. In one example, the analyzer can be an in-vitro analyzer (e.g., an immunochemistry or a coagulation analyzer).

In addition alternatively, the sample to be analyzed in an analyzer according to the present disclosure can be any of the samples discussed above. Accordingly, the analyzer can include a sample holder configured to support a sample in the in the sample plane 1 of the imaging system integrated into the analyzer.

For example, the sample to be analyzed can be contained in a sample vessel. In some examples, multiple samples can be contained in multiple receptacles of a sample vessel. For instance, the sample vessel can be one of a test tube, a multiwell plate or a cuvette. In other examples, the sample holder can be a slide, e.g. a microscope slide or a similar support of a sample.

In general, the analyzer including the imaging system of the present disclosure can include an imaging optics to produce an image of the sample plane containing the sample at a detector and a detector to capture the image.

In one example, the imaging system is arranged as microscope set-up. In this example, the illumination system can be integrated into the microscope set-up. The imaging system and the illumination system might share one or more optical components. For instance, a condenser of the illumination system might likewise be used as a collector for an imaging system. However in other examples, the components of the imaging system and the illumination systems are completely separate.

The detector of the analyzer can be any suitable detector for capturing an image of the sample in the sample plane, e.g., a CCD or CMOS camera.

In addition, the analyzer including the imaging system of the present disclosure might include a controller configured to control the components of the analyzer and to process any image captured by the detector. In particular, the controller might use automated image processing techniques to extract features automatically from images taken from the samples in the sample plane. As discussed above, the techniques of the present disclosure might improve the characteristics of artifacts created by dust particles or other particulate perturbations.

Therefore, the quality of the results of image processing procedures running on images taken from samples on the sample plane when using the illumination device according to the present disclosure might be improved in some examples.

In the preceding sections, different aspects of illumination systems and analyzers including illumination systems of the present disclosure have been discussed in connection with **FIG. 3****.** In the subsequent sections, in connection with **FIGS. 4****,** additional details regarding the layout of the homogenizer of the present disclosure will be explained.

**FIG. 4a** and **FIG. 4b** show a portion of two different illumination systems according to the present disclosure. In both cases, the figures only depict the input side of the illumination system including the light source 3, the homogenizer 20 and the collector 7. As discussed above, the layout of the collector 7 or any other optical element of the optics configured to guide light towards the sample in the sample plane might be different in other examples.

As can be seen in **FIG. 4a****,** the homogenizer includes a mixing rod 21 and an additional scattering element 22. Both elements, i.e., the mixing rod 21 and the scattering element 22 might contribute to homogenizing the output light of the homogenizer 20 angularly and spatially.

In particular, the mixing rod 21 might provide a relatively homogeneous spatial distribution of the light at the output surface. For example, the light of the light source 3 coupled into the mixing rod 21 might undergo multiple reflections at the side surfaces of the mixing rod 21. In this manner, the light can be spatially homogenized after having traversed the mixing rod 21.

For example, in case if the light source 3 has a spatially inhomogeneous output surface due to areas between different dies of a multiplicity of LED dies not emitting light (as in the arrangement discussed above), this spatial homogeneity can be homogenized at the output of the mixing rod 21.

However, the output light of the mixing rod 21 might not have the required angular homogeneity. This angular homogeneity can be provided, at least in part, by the additional scattering element 22 arranged at the output of the mixing rod 21. On the other hand, a single scattering element without a mixing rod (e.g. arranged over the output surface of the light source 3) might not provide the sufficient spatial homogeneity to apply the techniques of the present disclosure.

In the example depicted, the mixing rod 21 is attached directly to a light-emitting surface of the light source 3. In other examples the light guiding rod 20 might be spaced apart from the light-emitting surface of the light source 3. Additionally or alternatively, there might be additional elements between an output surface of the light source 3 and an input surface of the mixing rod 21 of the homogenizer 20. For instance, one or more lenses might be present between the output surface of the light source 3 and the input surface of the mixing rod 21 of the homogenizer 20.

In addition, in the example of **FIG. 4a****,** the scattering element 22 is attached to the output surface of the mixing rod 21. In other examples, the scattering element 22 might be spaced apart from an output surface of the mixing rod 21. In addition or alternatively, the homogenizer 20 might include additional elements in some examples.

The mixing rod 21 and is scattering element 22 are selected to provide the amount of homogenization needed to generate a spatially and angularly homogeneous output distribution of light emanating from the output surface of the homogenizer 20, as discussed above.

Depending on the layout of the illumination systems optics and the light source used, this might require different properties of the elements of the homogenizer 20.

In general, the output surface of the homogenizer 20 provides a secondary light source for the illumination system. In other words, the output surface of the homogenizer 20 is imaged in a defocused manner onto the sample plane (instead of the output surface of the light source 3) in the Koehler configuration illumination systems of the present disclosure.

Possible configurations of the mixing rod 21 and the scattering element 22 will be discussed next.

In one example, the light mixing rod 21 is a solid rod. For example, the mixing rod 21 can include a solid piece of dielectric material. The light can be guided in the mixing rod 21 at least partially by total internal reflection. In other examples, the light in the mixing rod 21 can be guided at least partially by reflection at reflective elements applied to the side surfaces of the mixing rod 21. For example, the mixing rod can be equipped with a reflective coating at its side surfaces.

In addition or alternatively, the mixing rod 21 can be hollow in some examples. Moreover, the mixing rod not necessarily has a straight shape as shown in **FIG. 4a****.** Rather, the mixing rod can also have a curved shape in some examples. In addition alternatively, the mixing rod 21 can have any suitable cross-sectional shape (e.g. a rectangular or circular cross-sectional shape).

The mixing rod 21 in **FIG. 4a** has a substantially uniform cross-sectional shape. However in other examples the mixing rod 21 can also have a non-uniform cross-sectional shape. For example, the mixing rod 21 can have an inward or outward tapering shape over at least a portion of its length.

In examples of **FIG. 4a** and **FIG. 4b** the output surface of the mixing rod 21 is substantially plane. In other examples, the output surface of the mixing rod 21 can have a curved shape.

The scattering element 22 will be discussed in the following sections.

In the example of **FIG. 4a** the scattering element 22 includes a scattering plate. For instance, the scattering plate can include a plurality of volume scattering centers included therein. In addition or alternatively the scattering plate can include a structured surface including a plurality of surface scattering centers. For example, a surface of the scattering plate can be frosted. In this manner, the light traversing the scattering plate gets angularly homogenized at the output of the homogenizer 20.

In other examples, the scattering element 22 can be a coating attached to the output surface of the mixing rod 21. For example, the coating can include a scattering material (e.g., dielectric particles). In addition alternatively, a scattering element can be attached to a sidewall surface of the mixing rod. For example, a scattering coating can be applied to sidewall surfaces of the mixing rod.

A second example configuration of the homogenizer 20 is shown in **FIG. 4b****.** As can be seen, the homogenizer 20 of **FIG. 4b** includes no separate scattering element. Rather, a scattering element is formed directly in the mixing rod 21.

For example, a scattering element can be formed in the output surface of the mixing rod 21. In one example the scattering element formed in the output surface of the mixing rod 21 can be a structured surface of the output surface. In one example, the output surface can be structured by e.g. sandblasting or other roughening techniques. In other examples, the scattering element can be formed in the output surface 25 of the mixing rod 21 by replication.

In addition alternatively, a scattering element can be formed directly in the sidewall surfaces of the mixing rod 21. Again, the sidewall surfaces can be structured to provide the scattering element.

In all of the examples above, the cooperation of the mixing rod 21 and the scattering element 22 achieves the required angular and spatial homogeneity of the output light of the homogenizer 20. In other words, the output light is homogenized to a degree, that the Bokeh of the illumination system is substantially homogeneous (see above).

In connection with **Fig. 4a** and **Fig. 4b****,** different homogenizers including a mixing rod and a scattering element have been discussed. In an alternative example, a homogenizer can include a mixing rod which has a sufficient length to provide for a spatially and homogeneous light distribution. In these examples, no additional scattering element (e.g., a scattering element attached to or integrated into the mixing rod) might be necessary.

In one example, a sufficient length to provide for a spatially and homogeneous light distribution of a mixing rod can be 10 times a diameter of the rod (e.g., 15 times the diameter of the rod).

The 'diameter' is measured in a plane perpendicular to a propagation direction of light through the mixing rod. The term 'diameter' refers to a diagonal for rods having a rectangular (particularly a square) cross section. The term 'diameter' refers to a diameter of the smallest circle inscribing the cross-section of the rods for cross-sectional shapes for which the 'term diameter' is not clearly defined.

In other examples, a length of the mixing rod can be 10 cm or more (or 20 cm or more), especially if the numerical aperture of the illumination system 40 is small, in other words, if only rays exiting the light source 3 under small angles are used for illumination of the specimen.

After the possible configurations of the homogenizer 20 has been discussed in more detail, the configuration of the light source 3 will be explained in more detail in the following section.

In general, the light source 3 can include any suitable light-emitting elements to provide a required illumination intensity on the sample plane of the illumination device. In some examples, the light source includes only a single light-emitting element. In other examples, the light source 3 includes a plurality of light-emitting elements. For example, the plurality of light-emitting elements can be arranged in an array.

As shown above, the light source 3 can include one or more light-emitting diodes. However, in other examples, the light source might include in other type of light-emitting device. For instance, the light source 3 might include in other solid-state light-emitting device than a diode. In still other examples, the light-emitting device might include one or more gas discharge lamps, glow discharge lamps or a fluorescent lamps.

All these different light-emitting elements might emit light in a substantially inhomogeneous manner. For example, the intensity of the image the light might vary spatially over the surface of the light-emitting element. In the example above, the areas between the different dies of the light-emitting diodes do not emit light leading to a spatially inhomogeneous distribution of the light exiting from the light source's surface.

This might also be the case for e.g. glow discharge or gas discharge lamp in which the light emitted from the filament or the discharge arc might be spatially inhomogeneous. However, by employing the homogenization techniques of the present disclosure, the output light emitted from the different light-emitting elements can be sufficiently homogenized to provide well behaved of focus artifacts.

This is again shown in **FIG. 4c****.** As can be seen, the sample plane 13 is substantially homogeneously illuminated by illumination light from the illumination system. However, in the middle of the sample plane 13 an artifact 14 is formed as discussed above, the artifact 14 might be caused by a particular object such as a grain of dust located in the light path of the illumination system. However, other than the artifact in **FIG. 2f****,** the artifact 14 in **FIG. 4c** has a substantially homogeneous intensity distribution. In other words, no noticeable internal structure can be seen in the circular artifact 14. Therefore, a probability that this artifact causes a distortion in an automated imaging process of the analyzer including the imaging system of the present disclosure might be reduced.

The preceding detailed description provides multiple examples illumination systems and analyzers including illumination systems, and methods for illuminating a sample been discussed. However, the illumination systems and analyzers including illumination systems, and methods for illuminating a sample can also be configured as set out in the following aspects:
1. An illumination system for a sample, comprising:
   a sample plane in which a sample to be illuminated can be arranged;
   an illumination device arranged to illuminate the sample plane,
   wherein the illumination device is arranged in a Koehler configuration,
   the illumination device comprising:
   a light source;
   optics arranged to guide light from the light source to the sample plane;
   a homogenizer disposed between the light source and the optics having an input face for receiving light from the light source and an output face for outputting light towards the optics,
   wherein the homogenizer is configured to provide a spatially and angularly homogeneous output light distribution.
2. The illumination system of aspect 1, wherein the homogeneous output light distribution varies spatially by less than 10%, optionally less than 5% in intensity over the output face of the homogenizer.
3. The illumination system of any one of aspects 1 or 2, wherein the homogeneous output light distribution has a substantially Lambertian distribution within an output aperture of the homogenizer selected so that a field stop of optics arranged to guide light from the light source to the sample plane is completely filled.
4. The illumination system of any one of any one of aspects 1 to 3, wherein the homogeneous output light distribution has a substantially Lambertian distribution within an output aperture of the homogenizer of 0.5 or less, optionally 0.2 or less.
5. The illumination system of any one of aspects 3 and 4, wherein the homogeneous output light distribution deviates by less than 10%, optionally less than 5% in intensity from a Lambertian distribution.
6. The illumination system of any one of aspects 1 to 5, wherein the homogenizer includes a mixing rod having a scattering element at its output end.
7. The illumination system of aspect 6, wherein the scattering element is attached to the output end of the mixing rod.
8. The illumination system of aspect 6, wherein the scattering element is spaced apart from the output end of the mixing rod.
9. The illumination system of aspect 6, wherein the scattering element is formed in an output surface of the mixing rod.
10. The illumination system of aspect 9, wherein the scattering element is formed by structuring an output surface of the mixing rod.
11. The illumination system of any one of aspects 6 to 8, wherein the scattering element includes a scattering plate.
12. The illumination system of any one of aspects 6 to 8, wherein the scattering element is bonded to an output surface of the mixing rod, optionally wherein the scattering element is glued to an output surface of the mixing rod.
13. The illumination system of any one of aspects 1 to 5, wherein the homogenizer includes a mixing rod and a scattering element.
14. The illumination system of aspect 13, wherein the scattering element is embedded in the mixing rod.
15. The illumination device of illumination system of aspect 13, wherein the scattering element is attached to a side surface of the mixing rod.
16. The illumination system of aspect 13, wherein the scattering element is formed in a side surface of the mixing rod.
17. The illumination system of any one of aspects 6 to 16, wherein the scattering element includes surface scatterers, a volume scatterers, or a combination of both.
18. The illumination system of any one of aspects 1 to 5, wherein the homogenizer includes a mixing rod which has a sufficient length to provide for a spatially and angularly homogeneous light distribution.
19. The illumination system of claim 18, wherein the sufficient length to provide for a spatially and homogeneous light distribution of a mixing rod is 10 times a diameter of the rod.
20. The illumination system of any one of aspects 6 to 19, wherein the mixing rod guides light by total internal reflection.
21. The illumination system of any one of aspects 6 to 19, wherein the mixing rod guides light by reflection at reflective side surfaces of the mixing rod.
22. The illumination system of any one of aspects 6 to 21, wherein the mixing rod is solid.
23. The illumination system of any one of aspects 6 to 21, wherein the mixing rod is hollow.
24. The illumination device of any one of the preceding aspects 1 to 23, wherein the optics is configured to image to use the output face of the homogenizer onto the sample plane in a de-focused manner.
25. The illumination device of any one of the preceding aspects 1 to 24, wherein the optics comprise a collector configured to collect light emanating from the output face of the homogenizer.
26. The illumination device of aspect 25, wherein the optics comprise a condenser configured to guide light towards the sample plane to illuminate a sample.
27. The illumination device of aspect 26, wherein the collector is configured to image the output face of the homogenizer onto a pupil plane of the condenser.
28. The illumination device of aspect 27, wherein the collector is sine corrected.
29. The illumination device of any one of the preceding aspects 1 to 28, wherein a Bokeh of the illumination device is homogenous.
30. The illumination device of aspect 29, wherein the homogenous Bokeh spatially varies by less than 10%, optionally less than 5% in intensity.
31. The illumination device of any one of the preceding aspect 1 to 30, wherein the light source has a spatially inhomogeneous emission pattern.
32. The illumination device of any one of the preceding aspect 1 to 31, wherein the light source includes multiple light sources arranged in a plane.
33. The illumination device of aspect 32, wherein the multiple light sources are LED light sources.
34. An analyzer, comprising:
   an illumination system according to any one of aspects 1 to 33; and
   an imaging system configured to capture an image of a sample in the sample plane.
35. The analyzer of aspect 34, wherein the sample is contained in one of a cuvette, a test tube, a multiwell plate, or a slide.
36. The analyzer of aspect 34 or aspect 35, wherein the illumination device is arranged in an epi-illumination configuration.
37. The analyzer of aspect 34 or aspect 35, wherein the illumination device is arranged in a trans-illumination configuration.
38. The analyzer of any one of aspects 34 to 37, wherein the imaging system and the illumination device share optical components.
39. The analyzer of aspect 38, wherein the imaging system and the illumination device share a condenser.
40. The analyzer of any one of aspects 34 to 39, wherein the imaging system is set up as a microscope.
41. The analyzer of any one of aspects 34 to 40, wherein the analyzer is an in-vitro analyzer.
42. The analyzer of any one of aspects 34 to 41, further comprising one or more detectors configured to capture images of the sample.
43. The analyzer of any one of aspects 34 to 42, further comprising an image recognition module configured to extract features from images of the sample.
44. A method for illuminating a sample with an illumination device arranged in a Koehler configuration, the method comprising:
   receiving light of a light source at a homogenizer;
   homogenizing the received light;
   outputting the homogenized light at an output face of the homogenizer;
   imaging the homogenized light onto a pupil plane of optics of an illumination device;
   guiding the light towards the sample by using illumination device optics,
   wherein the light is homogenized so that a Bokeh of the illumination device is homogenous.
45. The method for illuminating a sample of aspect 44, wherein the homogenized light varies spatially by less than 10%, optionally less than 5% in intensity over the output face of the homogenizer.
46. The method for illuminating a sample of aspect 44 or aspect 45, wherein the homogeneous output light has a substantially Lambertian distribution within an output aperture of the homogenizer selected so that a field stop of optics arranged to guide light from the light source to the sample is completely filled.
47. The method for illuminating a sample of aspect any one of aspects 44 to 46, wherein the homogeneous output light has a substantially Lambertian distribution within an output aperture of the homogenizer of 0.5 or less, optionally 0.2 or less.
48. The method for illuminating a sample of aspect any one of aspects 44 to 47, wherein the homogeneous output light distribution deviates by less than 10%, optionally less than 5% in intensity from a Lambertian distribution.
49. The method for illuminating a sample of any one of aspects 44 to 48, wherein the homogenous Bokeh spatially varies by less than 10%, optionally less than 5% in intensity.
50. A method for illuminating a sample in a Koehler configuration, the method comprising:
   receiving light of a light source at a homogenizer;
   spatially and angularly homogenizing the received light;
   outputting the homogenized light at an output face of the homogenizer;
   imaging the homogenized light onto a pupil plane of optics of an illumination device;
   guiding the light towards the sample by using illumination device optics.

## Claims

1. An illumination system for a sample, comprising:
a sample plane (1) in which a sample to be illuminated can be arranged;
an illumination device (40) arranged to illuminate the sample plane (1),
wherein the illumination device (40) is arranged in a Koehler configuration,
the illumination device comprising:
a light source (3);
optics (2, 7) arranged to guide light from the light source (3) to the sample plane (1);
a homogenizer (20) disposed between the light source (3) and the optics (2, 7) having an input face for receiving light from the light source (3) and an output face (25) for outputting light towards the optics (2, 7),
wherein the homogenizer (20) is configured to provide a spatially and angularly homogeneous output light distribution.

2. The illumination system of claim 1, wherein the homogeneous output light distribution varies spatially by less than 10%, optionally less than 5% in intensity over the output face (25) of the homogenizer (20).

3. The illumination system of any one of claims 1 or 2, wherein the homogeneous output light distribution has a substantially Lambertian distribution within an output aperture of the homogenizer (20) selected so that a field stop (32) of optics (2, 7) is completely filled.

4. The illumination system of any one of claims 1 to 3, wherein the homogenizer (20) includes a mixing rod (21) having a scattering element (22) at its output end.

5. The illumination system of claim 4, wherein the scattering element (22) is formed in an output surface of the mixing rod (21).

6. The illumination system of claim 4, wherein the scattering element (22) includes a scattering plate.

7. The illumination system of any one of claims 4 to 6, wherein the mixing rod (21) guides light by total internal reflection.

8. The illumination device of any one of the preceding claims 1 to 7, wherein the optics (2, 7) is configured to image to use the output face (25) of the homogenizer (20) onto the sample plane (1) in a de-focused manner.

9. The illumination device of any one of the preceding claims 1 to 8, wherein the optics (2, 7) comprise a collector (7) configured to collect light emanating from the output face (25) of the homogenizer (20), optionally wherein the collector (7) is sine corrected.

10. The illumination device of any one of the preceding claims 1 to 9, wherein a Bokeh of the illumination device (40) is homogenous, optionally wherein the homogenous Bokeh spatially varies by less than 10%, optionally less than 5% in intensity.

11. The illumination device of any one of the preceding claim 1 to 10, wherein the light source (3) includes multiple light sources arranged in a plane, optionally wherein the multiple light sources are LED light sources.

12. An analyzer, comprising:
an illumination system (40) according to any one of claims 1 to 11; and
an imaging system configured to capture an image of a sample in the sample plane.

13. The analyzer of claim 12, wherein the analyzer is an in-vitro analyzer.

14. A method for illuminating a sample with an illumination device (40) arranged in a Koehler configuration, the method comprising:
receiving light of a light source at a homogenizer (20);
homogenizing the received light;
outputting the homogenized light at an output face (25) of the homogenizer (20);
imaging the homogenized light onto a pupil plane of optics of an illumination device;
guiding the light towards the sample by using illumination device optics (2, 7),
wherein the light is homogenized so that a Bokeh of the illumination device (40) is homogenous.

15. The method for illuminating a sample of claim 14, wherein the homogenized light varies spatially by less than 10%, optionally less than 5% in intensity over the output face (25) of the homogenizer (20).
